(19) Europäisches Patentamt / European Patent Office / Office européen des brevets

(11) **EP 3 933 709 A1**

(12) **EUROPEAN PATENT APPLICATION**

(43) Date of publication:
**05.01.2022  Bulletin 2022/01**

(51) Int Cl.:
**G06N 3/063** *(2006.01)*          **G06N 3/08** *(2006.01)*
**G06N 3/10** *(2006.01)*

(21) Application number: **20305726.0**

(22) Date of filing: **30.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Upstride**
**94160 Saint Mande (FR)**

(72) Inventor: **BEZERRA LOPES, Wilder**
**75015 Paris (FR)**

(74) Representative: **Argyma**
**14 Boulevard de Strasbourg**
**31000 Toulouse (FR)**

(54) **GRAPH PROCESSING METHOD AND SYSTEM**

(57)     The invention concerns a graph processing method (200) configured to transform an input computational graph (10) into a desired computational graph (10H), the input computational graph comprising a plurality of input variables and at least one operation of a mathematical expression, wherein at least one input data sample comprising a plurality of channels to be fed as values of said input variables to the input computational graph. Said graph processing method comprises an information package generation step (210) configured to generate, as a function of the at least one input data sample, an information package (HCa) formed by utilizing entirely or partially a structure of a multivector (MV), wherein the multivector is a geometric algebra multivector; an information allocation step (220) configured to allocate the channels of the at least one input data sample to said generated information package; and an operation redefinition step (240) configured to replace the at least one operation of the input computational graph with at least one corresponding geometric algebra-based operation; wherein the desired computational graph (10H) comprises the at least one corresponding geometric algebra-based operation and said generated information package (HCa) loaded with the channels of the at least one input data sample.

Figure 5

EP 3 933 709 A1

**Description**

**FIELD OF THE INVENTION**

The present invention concerns the computational graphs.
The present invention relates to, in particular, the computational graphs executed for training a neural network.

**BACKGROUND OF THE INVENTION**

Since several decades, computations executed by computing devices, such as computers, smartphones and IoT devices, are all based on a mathematical paradigm, which is namely linear algebra. However, in the latest wave of artificial intelligence (AI), the neural-network and deep-learning algorithms are becoming much more data-hungry, and the mainstream computational paradigm based on linear algebra can no longer efficiently deal with such a great amount of data.

One of the challenges for the current deep-learning computation resides in efficiency of extracting useful information from raw input data. Due to the way the operations (e.g. addition and multiplication) are implemented, the mainstream computational paradigm is no longer efficient in extracting useful information from the input data -- only a fraction of the input data is extracted while the rest is wasted. The computational load of performing the algorithms may thus be considerably increased.

In order to overcome the above-mentioned issue, several neural-network approaches and data transformation methods are proposed. However, these approaches are algorithmic solutions and still cannot exploit the full potential of information extraction efficiency which is limited mainly due to the intrinsic nature of the mainstream computational paradigm.

Another challenge for the current deep-learning computation is that the improvement of the learning efficiency of neural networks, requires an incredible amount of computational power to train a model. Obviously, hardware optimization, following Moore's law until recent years and since then improving at a slower pace, is far away from being able to keep up with the power increase required for training the latest deep-learning models.

In addition, the market aims at a transition of deep-learning models migrated from datacenters to portable devices (e.g. smartphones) with embedded systems. Anticipating this scenario, several solutions are proposed to reduce model size (which is linked to the amount of memory and computations required) and power consumption. Those solutions, comprising for instance the utilization of compilers, such as TensorRT and Deeplite, and custom hardware such as Graphcore, Groq, are nevertheless not sufficient to minimize the amount of computational power required.

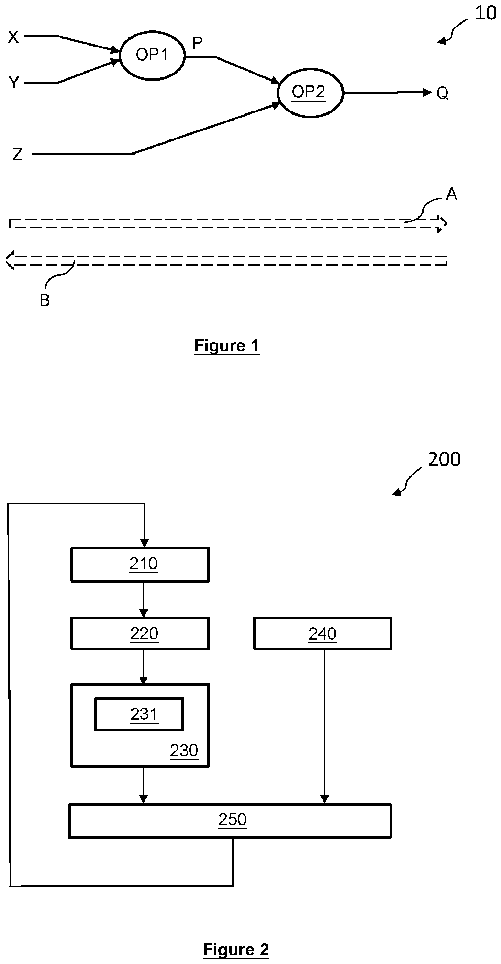

The learning efficiency also depends on the execution efficiency of computational graphs which are the standard way to abstract the execution of neural-network or deep-learning algorithms, as a function of the data flow and the computing operations performed. Examples of different ways of processing a computational graph, as illustrated in Figure 1, will be described in the following paragraphs.

A computational graph, being defined as a directed graph where the intermediate nodes correspond to arithmetic operations, is a way of expressing and evaluating a mathematical expression. More precisely, a computational graph corresponding to a mathematical expression comprises plural input variables, an output and one or plural intermediate nodes between the input variables and the output. The intermediate nodes may respectively correspond to a simple arithmetic operation such as addition, subtraction, multiplication or division. Alternatively, the intermediate nodes may respectively correspond to a composite operation which is a combination of plural arithmetic operations, for example, a fusion of multiplication and addition. Each of the intermediate nodes corresponds to an intermediate result calculated by using the values of the input variable(s) and/or other intermediate result(s). The output is the result of the mathematical expression.

While taking into account the limitations of the deep-learning framework, and/or the hardware resources of the computing devices available for training/inference of neural network models, it is important to choose an appropriate datatype to represent values of the input variables, the intermediate result(s), the output and the arithmetic operations as depicted below. The datatype may be selected among the conventional formats derived from the IEEE ("Institute of Electrical and Electronics Engineers") standards, such as: single-precision, floating-point (32bit or float), double-precision floating-point (64bit or double), integer fixed-point, etc.

Alternatively but preferably, the datatypes may be the formats developed with a specific purpose of accelerating the learning process of a neural network, such as the bfloat16 (Brain Floating Point) floating-point format utilized in Google Cloud TPUs (Tensor Processing Units). The bfloat16 discards 16 of the 24 bits in the significant part of the 32bit datatype. In other words, the bfloat16 is a truncated version of the float format, and reduces the range of decimal precision that can be represented by bfloat16 quantities.

Figure 1 illustrates an example of a conventional computational graph 10 with three input variables X, Y, and Z, two intermediate nodes OP1 and OP2, and one output Q. With the intermediate nodes OP1 and OP2 respectively being defined as a simple arithmetic operation (e.g. an addition and a multiplication), the computational graph corresponds to a mathematical equation (e1): $Q = (X + Y) \times Z$. For ease of understanding, each of the operations and its corresponding intermediate node (where said operation is performed) are indicated by the same references (e.g. "OP1" and "OP2").

We note that in the computational graph 10, an intermediate result "P" is obtained by performing an intermediate equation (e2): $P = X + Y$, which indicates that the operation OP1 is performed on the two input variables X and Y. The final result "Q" is obtained by performing another intermediate equation (e3): $Q = P \times Z$.

As mentioned above, it is possible that at least one of the intermediate nodes is a composite operation. Taking a non-limiting example where the computational graph 10 corresponds to a mathematical equation (e4):

$$Q = (X + 2 \times Y) \times \sqrt{Z},$$ the intermediate nodes OP1 and OP2 are respectively a composite operation. The intermediate node OP1 corresponds to a fusion of multiplication and addition, as represented in an intermediate equation (e5): $P = X + 2 \times Y$. Similarly, the intermediate node OP2 corresponds to another composite operation executed to perform an intermediate equation (e6): $Q = P \times \sqrt{Z}$.

"Forward Pass" and "Backpropagation" are two different ways of evaluating the value of the mathematical expression represented by a computational graph. When performing the forward pass, the value from variables are being passed in a forward direction (as indicated for example by the direction A illustrated in Figure 1) from the left (input) to the right where the output is. The above-mentioned computational graph 10 where the intermediate nodes OP1 and OP2 being respectively defined as a simple arithmetic operation, is taken as an example. By giving the values 3, -2 and 4 to the values of the input variables X, Y and Z, we perform the forward pass and get the following values for the outputs on each of the intermediate nodes OP1 and OP2. In other words, firstly we use X = 3 and Y = -2, to perform the above intermediate equation (e2) to get $P = 1$. Then we use $P = 1$ and $Z = 4$ to perform the above intermediate equation (e3) to get $Q = 4$.

"Backpropagation", also named "Backward Pass", is frequently utilized in the implementation of deep learning algorithms. A deep learning algorithm is firstly converted into a computational graph (e.g. the computation graph 10), the backpropagation on the computational graph is then performed by calculating gradients at the final output, at the intermediate result(s) and at the input variables. The gradients are calculated in a backward direction (as indicated for example by the direction B illustrated in Figure 1) from the right (output Q) to where the input variables are. These gradients are essential for training the neural network using gradient descent-based methods.

The computational graph 10 is taken as an example. The backpropagation begins by finding the derivative of the final output Q with respect to the final output Q itself. The value of the gradient $\frac{\partial Q}{\partial Q}$ is equal to 1. Then, the gradient $\frac{\partial Q}{\partial P}$ with respect to the intermediate result P, and the gradient $\frac{\partial Q}{\partial Z}$ with respect to the input variable Z, are calculated. Finally, the gradients $\frac{\partial Q}{\partial X}$ and $\frac{\partial Q}{\partial Y}$ with respect to the input variables X and Y are calculated. Furthermore, in order to efficiently calculate the gradients, the chain rule of differentiation can be applied.

By using local information to compute a global value, the backpropagation improves the computational efficiency of the computational graph and is preferably utilized in the implementation of deep-learning algorithms. However, the backpropagation by itself is still not sufficient to meet the computational efficiency required for extracting the maximum information from data while executing the computational graph during the training of deep-learning models.

Whether a computational graph is executed in a way of the forward pass or of the backpropagation, the operations or/and the calculations of the gradients are in general performed by computing devices (e.g. computers) assuming a linear algebra-based vector space. The known datatypes, such as the aforementioned datatypes, are compatible with the linear algebra-based operations. In other words, the values of the input variables of a computational graph, represented by any one of the known datatypes, can be respectively transformed and represented by a vector.

A multiplication of two vectors (i.e. values of two input variables in the form of vectors) is performed by operating an inner product, which maps said two vectors into a real-valued scalar. The real-valued scalar carries important information about said two vectors: their lengths and the angle between the two vectors.

In machine learning, each input data sample can be seen as a vector. A neural network can be trained by repeatedly executing a computational graph but each time with a set of input data samples (in the form of vectors) fed to the computational graph, until a predetermined stop criterion is met. During the training phase, the neural network generates outputs which are real-valued scalars or vectors. By comparing the generated outputs with the known outputs corresponding to the sets of input data samples, the neural network learns the correlations among the sets of input data samples and the respective generated outputs. The purpose of performing the training phase is to generate a model which maps the original vector space built according to the sets of input data samples, onto the known outputs and hopefully as well as onto unknown outputs for future use.

However, some important pieces of information can be missed whenever the vectors are operated with the inner product operation. For example, during the execution of a computational graph, when a linear algebra-based vector multiplication (i.e. inner product) is performed on two input data samples (i.e. values of input variables in the form of vectors), information about correlations between said two input data samples may not be completely captured by the operation output and can no longer contribute to the training of the neural network. Such loss of information certainly results in increasing the amount of input data samples required for training of the neural network and/or in increasing the number of computing iterations performed for the training.

In addition, although using the datatype "bfloat16" could make a neural network model more compact in a quantization scenario, as the neural network models become much more data hungry, none of the known datatypes (including "bfloat16") has properties which allow to considerably reduce the amount of data needed to train the neural-network computational graph, improving the performance of deep-learning algorithms.

The present invention aims therefore at providing a robust solution which allows to preserve the information contained in the input data samples during the execution of the computational graph. This allows the training of neural networks with better data efficiency and higher prediction accuracy while preserving the essence of the neural-network architecture. Consequently, training a neural network requires fewer input data samples, a smaller number of computing iterations, and lower energy consumption. The size of the neural network model can also be reduced.

## SUMMARY OF THE INVENTION

The invention concerns a graph processing method configured to transform an input computational graph into a desired computational graph, the input computational graph comprising a plurality of input variables and operations of a mathematical expression, wherein at least one input data sample comprising a plurality of channels to be fed as values of said input variables to the input computational graph. Said graph processing method comprises an information package generation step configured to generate, as a function of the at least one input data sample, an information package formed by utilizing entirely or partially a structure of a multivector, wherein the multivector is a geometric-algebra multivector; an information allocation step configured to allocate the channels of the at least one input data sample to said generated information package; and an operation redefinition step configured to replace the operations of the input computational graph with corresponding geometric algebra-based operations; wherein the desired computational graph comprises the corresponding geometric algebra-based operations and said generated information package loaded with the channels of the at least one multichannel input data sample.

The present invention allows thus to preserve the information contained in the channels of the input data samples during the execution of the computational graph. This allows the training of neural networks with better data efficiency and higher prediction accuracy while preserving the essence of the neural-network architecture. Consequently, training a neural network requires fewer input data samples, a smaller number of computing iterations, and lower energy consumption. The size of the neural network model can also be reduced.

According to an embodiment, the channels of the at least one multichannel input data sample are allocated to "m" slots of said generated information package, "m" being the number of slots which is an integer determined as a function of the at least one multichannel input data sample.

According to an embodiment, said multivector is a D-dimensional multivector built based on a vector space formed according to a t-dimensional vector basis {r1, r2,... rt} formed by the vectors r1, r2... rt, "t" being an integer utilized to represent the dimension of the vector basis, the number "D" being the dimension of the multivector (MV) determined as a function of said number "t".

According to an embodiment, said multivector comprises coefficients which respectively correspond to one of blades of the multivector, the number of the coefficients being equal to the number "D" which is equal to $2^t$; among the coefficients of the generated multivector, m coefficients being respectively utilized as a position of one of the "m" slots of the generated information package.

According to an embodiment, the information allocation step is configured to allocate the channels of the at least one multichannel input data sample to said generated information package, according to the position of said slot which corresponds to said channel of the input data sample.

According to an embodiment, the information package loaded with the channels of the at least one multichannel input data sample contains information about correlations between any two of the channels of the at least one multichannel input data sample.

According to an embodiment, the m coefficients have an algebraic relationship governed by Geometric Algebra; each of the m coefficients is generated as a function of the respective channels of the at least one input data sample.

According to an embodiment, in the information package generation step, information contained in one of said channels is allocated to one of the m slots of the generated information package, which allows a position of said slot to be used as the coefficient of said slot where the information of said channel is allocated.

According to an embodiment, said multivector is represented as $MV = H0 + H_1 \cdot r_1 + H_2 \cdot r_2 + H_3 \cdot r_3 + H_{12} \cdot r_{12} + H_{23} \cdot r_{23} + H_{31} \cdot r_{31} + H_{123} \cdot r_{123}$, wherein:

- the additions and multiplications are geometric algebra-based additions and multiplications;
- MV is the multivector;
- $\{r_1, r_2, r_3\}$ is a vector space basis based on which the multivector MV is built;
- $r_{12}, r_{23}, r_{31}$ are respectively a unit bivector;
- $r_{123}$ is a trivector;
- $\{1, r_1, r_2, r_3, r_{12}, r_{23}, r_{31}, r_{123}\}$ are respectively blades of the multivector MV; and
- $H0, H_1, H_2, H_3, H_{12}, H_{23}$ and $H_{31}$ and $H_{123}$ being coefficients of the blades $1, r_1, r_2, r_3, r_{12}, r_{23}, r_{31}$, and $r_{123}$ of the multivector MV.

According to an embodiment, by utilizing partially the structure of the multivector, one of following two information packages respectively comprising a plurality of slots is generated in the information package generation step:

- the information package HCa, represented as: $HCa = H0 + H_{12} \cdot r_{12} + H_{23} \cdot r_{23} + H_{31} \cdot r_{31}$, wherein HCa is said information package formed by using the unit bivectors $r_{12}, r_{23}, r_{31}$ and the respective coefficients $H_{12}, H_{23}$ and $H_{31}$ of said multivector; $H_{12}, H_{23}$ and $H_{31}$ being the coefficients utilized as positions of the slots in the information package HCa;
- the information package HCb, represented as: $HCb = H0 + H_1 \cdot r_1 + H_2 \cdot r_2 + H_3 \cdot r_3$, wherein HCb is said information package formed by using the vectors $r_1, r_2, r_3$ of the vector basis and the respective coefficients $H_1, H_2$ and $H_3$ of said multivector; $H_1, H_2$ and $H_3$ being the coefficients utilized as positions of the slots in the information package HCb.

According to an embodiment, the information allocation step is configured to allocate respectively the channels of the at least one input data sample, into a corresponding slot of the slots of the information package HCa or HCb generated in the information package generation, according to the position $H_{12}, H_{23}, H_{31}$ or $H_1, H_2, H_3$ of said slot which corresponds to said channel, so as to obtain the information package HCa or HCb which is loaded with the channels DS1, DS2, DS3 of the input data sample DS and is represented as:

$$HCa = H0 + DS1 \cdot r_{12} + DS2 \cdot r_{23} + DS3 \cdot r_{31};$$

or

$$HCb = H0 + DS1 \cdot r_1 + DS2 \cdot r_2 + DS3 \cdot r_3.$$

According to an embodiment, in the information package generation step, by utilizing the structure of the multivector MV, an information package HCc comprising a plurality of slots is generated and is represented as $HCc = H0 + H_1 \cdot r_1 + H_2 \cdot r_2 + H_3 \cdot r_3 + H_{12} \cdot r_{12} + H_{23} \cdot r_{23} + H_{31} \cdot r_{31} + H_{123} \cdot r_{123}$, wherein HCc is said information package formed by using the vectors r1, r2, r3 of said vector basis, the respective coefficients H1, H2, H3, the unit bivectors r12, r23, r31, and the respective coefficients H12, H23, H31 of said multivector MV; H1, H2, H3, H12, H23 and H31 being the coefficients utilized as positions of the slots in the information package HCc.

According to an embodiment, the information package allocation step is configured to allocate respectively the channels of the at least one input data sample comprising a first and a second input data samples, into a corresponding slot of the slots of the information package HCc generated in the information package generation, according to the positions H1, H2, H3, H12, H23, or H31 of said slot which corresponds to said channel, so as to obtain the information package HCc loaded with the channels DS1, DS2, DS3 of the first input data sample and the channels DS1', DS2', DS3' of the second input data sample, the information package HCc being represented as $HCc = H0 + DS1 \cdot r_1 + DS2 \cdot r_2 + DS3 \cdot r_3 + DS1' \cdot r_{12} + DS2' \cdot r_{23} + DS3' \cdot r_{31} + H_{123} \cdot r_{123}$.

According to an embodiment, the graph processing method comprises further a weight package generation step configured to generate a weight package, as a function of at least one weight set comprising "q" weights.

According to an embodiment, the weight package generation step comprises a weight package allocation step configured to generate the weight package by allocating said q weights to a duplication of the information package which is generated in the information package generation step.

According to an embodiment, in the weight package generation step, one of said q weights of the at least one weight set is allocated to one of slots of the duplicated information package.

According to an embodiment, the weight package generation step is configured to generate the weight package

HCWa, HCWb or HCWc which is loaded with the weights W1, W2, W3 of the at least one weight set and is represented as:

- *HCWa = H*0 + *W*1 · $r_{12}$ + W2 · $r_{23}$ + *W*3 · $r_{31}$, which corresponds to the information package package HCa generated in the information package generation step; or
- *HCWb = H*0 + *W*1 · $r_1$ + *W*2 · $r_2$ + *W*3 · $r_3$, which corresponds to the information package package HCb generated in the information package generation step; or
- *HCWc = H*0 + *W*1 · $r_1$ + *W*2 · $r_2$ + *W*3 · $r_3$ + *W*12 · $r_{12}$ + *W*23 · $r_{23}$ + *W*31 · $r_{31}$ + $H_{123}$ · $r_{123}$, which corresponds to the information package package HCc generated in the information package generation step.

According to an embodiment, in at least one of said multivector, said generated information package and said weight package, at least one of following conditions is met:

- H0 is equal to 1,
- $H_{123}$ is equal to 0 or 1,
- said vector basis is an orthonormal vector basis,
- $r_1^2 = r_2^2 = r_3^2 = 1$,
- $r_{12}^2 = r_{23}^2 = r_{31}^2 = 1$,
- $r_{123}^2 = -1$,
- the vector space is a Euclidean space $R^3$.

According to an embodiment, the number "m + 1", where m is the number of slots, is power of 2.
According to an embodiment, the operations of the input computational graph comprising at least one of linear algebra-based additions, subtractions, multiplications and/or divisions; the operation redefinition step comprising at least one of following steps:

• the linear algebra-based addition is replaced by a geometric algebra-based addition;
• the linear algebra-based subtraction is replaced by a geometric algebra-based subtraction;
• the linear algebra-based multiplication is replaced by a geometric algebra-based multiplication;
• the linear algebra-based division is replaced by a geometric algebra-based division.

According to an embodiment, the graph processing method comprising further a training step configured so as to train the desired computational graph comprising the geometric algebra-based operations and the generated weight package, by using the generated information package loaded with the channels of the multichannel input data samples fed into the input computational graph.
According to an embodiment, during the training step, the weights contained in said weight package are adjusted by using a new information package generated as a function of different input data samples newly fed into the input computational graph.
According to an embodiment, initial values of the weights of the at least one weight set are assigned by the user of the graph processing method.
The invention concerns also a graph processing system comprising a calculation module configured to perform at least one of steps of the above-mentioned graph processing method, wherein the calculation module is one of following standard processors or coprocessors: a standard processor x86, a standard processor ARM, a graphics processing unit (GPU), a tensor processing unit (TPU), a neural processing unit (NPU), a field-programmable gate array (FPGA).

**BRIEF DESCRIPTION OF THE DRAWINGS**

The invention will be better understood on reading the description that follows, and by referring to the appended drawings given as non-limiting examples, in which identical references are given to similar objects and in which:

Figure 1 illustrates an example of a conventional computational graph.

Figure 2 illustrates steps of a graph processing method according to an embodiment of the invention.

Figure 3 depicts an example of transforming an input computational graph into a desired computational graph, according to the invention.

Figure 4 illustrates an information package generation step, an information allocation step of the graph processing method, and an information package according to an embodiment of the invention.

Figure 5 illustrates possible information packages respectively with at least one three-channel input data sample which has been allocated, according to an embodiment of the invention.

Figure 6 illustrates possible weight packages, according to an embodiment of the invention.

## DETAILED DESCRIPTION

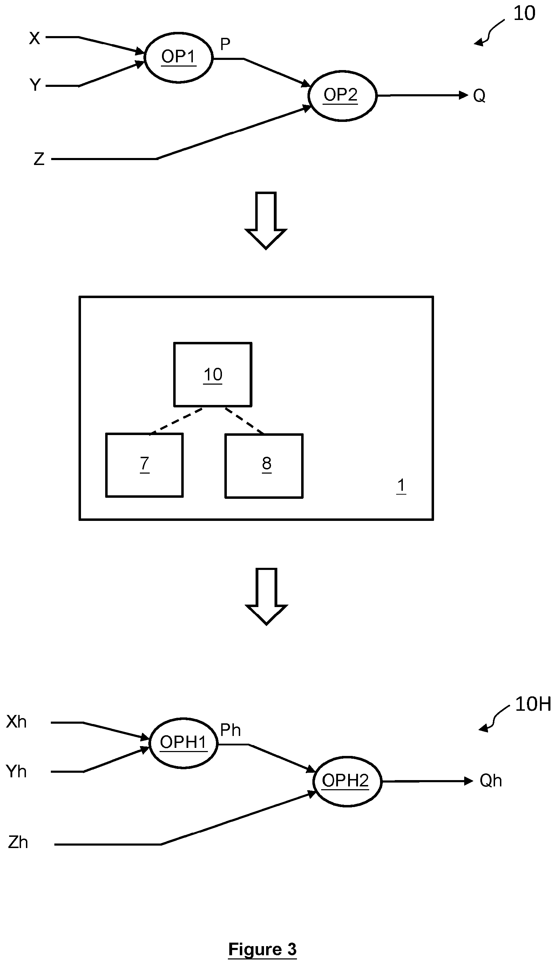

Figure 2 illustrates steps 210 to 250 of a graph processing method 200 according to an embodiment of the invention. The graph processing method 200, executed by a graph processing system 1, is configured to transform an input computational graph (which is a conventional computational graph) into a desired computational graph which is built by using Geometric Algebra. The graph processing system 1 will be described in detail in Figure 3 as well as in the concerned paragraphs following the paragraphs regarding the graph processing method 200.

For the input computational graph, at least one input data sample comprising channels fed as values of input variables to the input computational graph. In other words, the at least one input data sample is at least one multichannel input data sample. The input computational graph, corresponding to a mathematical expression, comprises "p" input variables of the mathematical expression, at least one operation of said mathematical expression, and an output. Said number "p" is the number of variables which is an integer preferably greater than 2. The at least one operation is the at least one intermediate node between the p input variables and the output. The input computational graph is a conventional computational graph.

After the execution of the graph processing method 200, the desired computational graph is obtained. The desired computational graph comprises a generated information package loaded with the channels of the at least one multichannel input data sample, at least one geometric algebra-based operations corresponding to the at least one operation of the mathematical expression, and a transformed output (e.g. "Qh" of Figure 3). The generated information package loaded with the channels of the at least one multichannel input data sample can be considered as values to be fed to transformed input variables which correspond to the p input variables. The transformed output (e.g. "Qh" of Figure 3) corresponds to the output (e.g. "Q" of Figure 3) of the input computational graph. More precisely, the transformed output of the desired computational graph is equal to the output of the input computational graph in terms of the value, but is different from said transformed output in terms of the datatype (data format). Compared to the conventional input computational graph, the desired computational graph allows to extract more information from the at least one input data sample for the execution of the desired computational graph, which improves the data efficiency of the training of a neural network by executing the desired computational graph.

Figure 3 depicts an example of transforming an input computational graph 10 into a desired computational graph 10H, according to an embodiment of the invention. In the present example, the input computational graph 10 comprises three input variables X, Y, Z (with "p" being equal to 3), two operations OP1 and OP2, and an output Q. The input computational graph 10 is identical to the example illustrated in detail in Figure 1 as well as in the above paragraphs concerned Figure 1, the related description is thus be omitted to avoid redundancy.

The desired computational graph 10H comprises three transformed input variables Xh, Yh, Zh, two transformed operations OPH1 and OPH2, and a transformed output Qh, which respectively correspond to the three input variables X, Y, Z, the operations OP1 and OP2, and the output Q of the input computational graph 10.

The at least one input data sample can be a n-channel input data sample DS comprising "n" channels DS1, DS2... DSn. The input data sample DS comprising the n channels is fed, as values of the "p" input variables, into the input computational graph. Said number "n" is the number of channels which is an integer preferably greater than 2. The number "n" of channels can be equal to the number "p" of input variables, i.e., $n = p$.

In addition, as mentioned below in detail, an information package loaded with the channels of the n-channel input data sample DS is generated in the information allocation step 220, comprises values being represented in a desired data format to be fed as values of the transformed input variables, into the desired computational graph.

At least one weight set comprising weights W1, W2... Wq (where q is an integer) being allocated to a weight package, will be adjusted during the training step 250. The generation of the weight package as well as the training step 250, will be described in the following paragraphs.

Taking an RGB color value of a pixel of a standard color image as a non-limiting example, it comprises intensity values of the colors red, green and blue, and can thus be considered as a n-channel input data sample DS (with the number "n" being equal to 3) comprising three channels DS1, DS2 and DS3 to be fed to the input computational graph 10. According to an embodiment, the channels DS1, DS2, DS3 of the input data sample DS are values being respectively represented for example as an integer between 0 and 255. In another non-limitative embodiment, the input data sample DS is a six-channel input data sample comprising six channels acquired from a three-axis accelerometer and from a three-axis gyroscope.

It is noted that the datatype (data format) of the n channels DS1, DS2... DSn of the input data sample DS can be, alternatively, one of the aforementioned conventional datatypes compatible with the linear algebra-based operations, such as the operations executed in the intermediate nodes OP1 and OP2 of the input computational graph 10. Similarly, the datatype (data format) of said q weights W1, W2... Wq can be, alternatively, one of the aforementioned conventional datatypes compatible with the linear algebra-based operations.

The information package generation step 210 is configured to generate, as a function of the at least one input data sample (DS), an information package which comprises "m" slots, where "m" is the number of slots which is an integer preferably greater than 2. Said number "m" of slots, determining the size of the information package, is determined as a function of the size of the at least one input data sample. The size of the at least one input data sample corresponds to the number "n" of channels of the at least one input data sample. Advantageously, the number "m" of slots is determined as a function of said number "n" of channels. Advantageously, the number "m" of slots is greater than or equal to said number "n" of channels. According to a preferable embodiment, the number "m + 1", where "m" is the number of slots, is a power of 2. The m slots of the generated information package will respectively be utilized to store one of the n channels DS1, DS2... DSn of the at least one input data sample DS.

It is to note that different values of the number "m" of slots can be considered as corresponding to different shapes of the information package and as well as corresponding to different Clifford Algebras. In other words, according to the number of channels of the at least one input data sample, the neural network to be trained and/or to be applied to a specific scientific or industrial application, said number "m" of slots is appropriately determined so as to utilize algebraic characteristics of a Clifford Algebra which corresponds to the "m" slots of the generated information package.

The information package is generated by using at least a part of the structure of a D-dimensional Geometric Algebra multivector, where the number "D" is an integer utilized to represent the dimension of the Geometric Algebra multivector. The D-dimensional Geometric Algebra multivector is built based on a vector space formed according to a t-dimensional vector basis {r1, r2,... rt}, wherein the vectors r1, r2... rt form said vector basis, "t" being an integer utilized to represent the dimension of the vector basis. According to an embodiment, the number "t" is an integer greater than or equal to $log_2(n)$, where "n" is the number of channels of the at least one multichannel input data sample. The t-dimensional vector basis {r1, r2,... rt} of the vector space is preferably an orthonormal vector basis wherein the vectors r1, r2... rt of said vector basis are orthogonal vectors. Said vector space can be advantageously a Euclidean space $R^t$ or, alternatively, a non-Euclidean vector space.

The number "D" (i.e. the dimension of the multivector) is determined as a function of said number "t". According to an embodiment, the number "D" is equal to $2^t$. The number "D" is equal to or greater than the number "n" of channels of the at least one input data sample. The D-dimensional multivector comprises a plurality of blades respectively corresponding to a coefficient. The number of blades and that of coefficients of the multivector is equal to the number "D". The number "D" is an integer greater than the number "m" of slots of the information package which will be generated by using (partially or entirely) the D-dimensional multivector. The blades and coefficients of the Geometric Algebra multivector will be described more in detail in the example of a multivector MV mentioned below.

In an embodiment where the at least one input data sample DS comprising the three channels DS1, DS2 and DS3 (with the number "n" being equal to 3), the information package is generated by using a D-dimensional or a higher-dimensional Geometric Algebra multivector MV. The minimum integer value for the number "t" is, as mentioned above, equal to 2. In the present embodiment, "t" is set to be 3 to allow for leveraging higher-dimensional multivectors. The number "D" is thus equal to 8 (i.e. D = $2^t$). The multivector MV is thus represented as a following equation (1): $MV = H0 + H_1 \cdot r_1 + H_2 \cdot r_2 + H_3 \cdot r_3 + H_{12} \cdot r_{12} + H_{23} \cdot r_{23} + H_{31} \cdot r_{31} + H_{123} \cdot r_{123}$, where {r1, r2, r3} being a three-dimensional vector basis of a vector space; r12, r23, r31 being respectively an unit bivector, r123 being a trivector, {1, r1, r2, r3, r12, r23, r31, r123} being the blades of the multivector MV, and H0, H1 to H123 being eight coefficients respectively corresponding to the blades of the multivector MV.

Preferably, the vectors basis {r1, r2, r3} of the vector space is an orthonormal vector basis wherein the vector r1, r2, r3 of said vector basis are orthogonal vectors. More advantageously, the vectors basis {r1, r2, r3} is an orthonormal vector basis of a Euclidean space R3. It is noted that in the embodiments mentioned below, the eight-dimensional multivector MV is built based on a Euclidean space R3 formed according to an orthonormal vector basis {r1, r2, r3}, wherein the r1, r2, r3 are orthogonal vectors forming said orthonormal vector basis. In another embodiment, the vectors r1, r2, r3 are not orthogonal.

According to a preferable embodiment, the square of the orthogonal vector r1 is equal to 1 by performing a Clifford's geometric product, which is represented as $r_1^2 = r_1 \cdot r_1 = 1$. Similarly, $r_2^2 = r_3^2 = 1$. The additions and multiplications utilized in the equation (1) are geometric algebra-based additions and multiplications, not linear algebra-based ones.

Moreover, the unit bivector r12 is obtained by performing a geometric product of the orthogonal vectors r1 and r2, which is represented as $r_{12} = r_1 \cdot r_2$. It is noted that said geometric product is anti-symmetric. Similarly, $r_{23} = r_2 \cdot r_3$ and $r_{31} = r_3 \cdot r_1$. The square of the unit bivectors r12 is equal to -1, which is obtained by performing the following equation: $r_{12}^2 = e_1 e_2 e_{12} = e_1(-e_1) = -1$. Similarly, $r_{23}^2 = r_{31}^2 = -1$. The square of the trivector r123 is equal to -1, which is represented as $r_{123}^2 = -1$.

As mentioned above, the information package comprising "k" coefficients, is formed by utilizing entirely or partially the structure of the multivector (MV) for the n-channel input data sample, where "k" is the number of coefficients as well as the number of blades of the information package. The number "k" of coefficients is smaller than or equal to the number "D" of the multivector (MV). The number "k" of coefficients is equal to or greater than the number "n" of channels of the at least one input data sample.

Taking the above-mentioned multivector MV as an example, the information package can be formed by utilizing the entire multivector MV itself, or by using a sub-multivector of the multivector MV (e.g. two sub-multivectors MVR or MVP as described below). According to an embodiment, the number "k" of coefficients of the information package is equal to the number of coefficients (which is equal to the dimension "D") of the multivector MV utilized to generate said information package. According to another embodiment, the number "k" of coefficients of the information package is equal to the same number "k" of coefficients of the sub-multivector (MVR or MVP) utilized to generate said information package, where the number "k" of coefficients is smaller than the number "D".

The sub-multivector MVR is formed by using the unit bivectors r12, r23, r31 and the respective four coefficients H0, H12, H23 and H31 of the multivector MV. The number "k" of coefficients of the sub-multivector MVR is thus equal to 4. The coefficients H1, H2, H3 and H123 of said multivector MV are respectively set to 0. The sub-multivector MVR, being derived from said multivector MV, can be represented as a following equation (2): $MVR = H0 + H_{12} \cdot r_{12} + H_{23} \cdot r_{23} + H_{31} \cdot r_{31}$.

As for the sub-multivector MVP, it is a paravector derived from the multivector MV and is represented as a following equation (3): $MVP = H0 + H_1 \cdot r_1 + H_2 \cdot r_2 + H_3 \cdot r_3$, formed by using the vectors r1, r2, r3 of the vector basis and the respective four coefficients H0, H1, H2 and H3 of said multivector MV. The number "k" of coefficients of the information package generated by using the sub-multivector MVP is thus equal to 4. The coefficients H12, H23, H31 and H123 of said multivector MV are respectively set to 0.

The multivector MV, as described above and in the equation (1), is another option to be utilized to generate the information package. The number "k" of coefficients of the information package is thus equal to 8, which is also the number "D".

Any one of the multivector MV and the sub-multivectors MVR and MVP, generated according to the channels DS1, DS2, DS3 of the at least one input data sample DS, can be utilized to generate the information package.

Among the k coefficients of the multivector or of the sub-multivector, m coefficients can respectively be utilized as a "position" of one of the m slots of the information package. The number "m" of slots is equal to or greater than the number "n" of channels of the at least one input data sample. The m slots respectively correspond to one of the n channels DS1, DS2... DSn of the input data sample DS. The m coefficients have an algebraic relationship governed by Geometric Algebra. Each of the m coefficients is generated as a function of the respective channels DS1, DS2... or DSn of the input data sample DS.

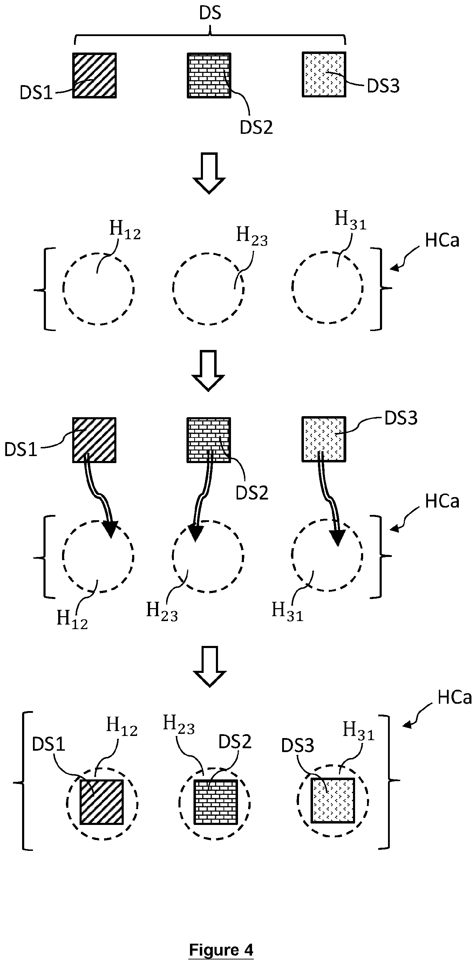

For ease of comprehension, the sub-multivector MVR is taken as an example of being utilized to generate the information package HCa. In other words, the information package HCa, being formed by utilizing partially the structure of the multivector MV, is represented as a following equation (4): $HCa = H0 + H_{12} \cdot r_{12} + H_{23} \cdot r_{23} + H_{31} \cdot r_{31}$ and is illustrated in Figure 4. Figure 4 illustrates the information package generation step 210, the information allocation step 220, and the information package HCa, according to an embodiment of the invention.

The information package HCa comprises a first, a second and a third slots (where the number "m" of slots is equal to 3). According to an embodiment, $r_{12}^2 = r_{23}^2 = r_{31}^2 = -1$, which is, as mentioned above, isomorphic to the subalgebra of quaternions. The coefficient H12, corresponding to the unit bivector r12, is the position H12 of the first slot of the information package HCa. More precisely, information contained in the channel DS1 of the input data sample DS is allocated to the first slot in the information package HCa, which allows the position H12 of said first slot to be used as the coefficient H12 of the first slot. During the following information allocation step 220 (which will be described below), the channel DS1 will be entirely allocated into the first slot of the information package HCa. Similarly, the coefficients H23 and H31, respectively corresponding to the unit bivectors r23 and r31, are respectively the position H23 of the second slot and the position H31 of the third slot in the information package HCa. The second and the third slots respectively correspond to the channels DS2 and DS3 of the input data sample DS. Furthermore, the coefficient H0 is preferably equal to 1. Such preference for setting the value of coefficient H0 to be 1 is related to the fact that the basis of the geometric algebra of quaternions can be composed by {1, r12, r23, r31}. Since in the present embodiment, no data comprised in the at least one input data sample needs to be allocated by using the coefficient H0 of the basis element "1", we leave it as it is to be consistent with the mathematical definition of said basis. In addition, the coefficient H0 being equal to 1 can be utilized as a flag so as to facilitate the recognition of the information package during the computation.

The information package (such as the information package HCa) generated in the current step 210 can be considered as a data container without having been loaded yet with all of the channels DS1, DS2... DSn of the at least one input data sample DS.

In another embodiment, the above-mentioned paravector MVP is utilized to generate the information package HCb. In other words, the information package HCb, being formed by utilizing partially the structure of the multivector MV, is represented as a following equation (5): $HCb = H0 + H_1 \cdot r_1 + H_2 \cdot r_2 + H_3 \cdot r_3$, where $r_1^2 = r_2^2 = r_3^2 = 1$. The

information package HCb comprises a first, a second and a third slots (with the number "m" of slots being equal to 3).

The coefficient H1, corresponding to the vector r1 of the vector basis, is a position H1 of the first slot of said information package HCb. More precisely, information contained in the channel DS1 is allocated to the first slot in the information package HCb, which allows the position H1 of said first slot to be used as the coefficient H1 of the first slot. During the following information allocation step 220, the channel DS1 of the input data sample DS will be entirely allocated into the first slot of the information package HCb. Similarly, the coefficients H2 and H3, respectively corresponding to the vectors r2 and r3 of the vector basis, are respectively the position H2 of the second slot and the position H3 of the third slot in the information package HCb. The second and the third slots respectively correspond to the channels DS2 and DS3 of the input data sample DS. Furthermore, similar with the above-mentioned embodiment, the coefficient H0 is preferably equal to 1.

According to another embodiment, the information package HCc, being formed by utilizing entirely the structure of the multivector MV, is represented as a following equation (6): $HCc = H0 + H_1 \cdot r_1 + H_2 \cdot r_2 + H_3 \cdot r_3 + H_{12} \cdot r_{12} + H_{23} \cdot r_{23} + H_{31} \cdot r_{31} + H_{123} \cdot r_{123}$, where, as mentioned above, $r_1^2 = r_2^2 = r_3^2 = 1$, $r_{12}^2 = r_{23}^2 = r_{31}^2 = -1$, and $r_{123}^2 = -1$.

Compared to the above-mentioned two information package HCa and HCb which allow to handle merely one single input data sample DS at a time, in the present embodiment, the at least one input data sample comprises plural input data samples DSa and DSb to be fed to the input computational graph. The information package generation step 210 is executed to generate the multivector MV which is utilized to generate the information package HCc, as a function of a first and a second input data samples DSa and DSb. The first multichannel input data sample DSa comprises, for instance, the above-mentioned channels DS1, DS2, DS3. The second multichannel input data sample DSb comprises channels DS1', DS2', DS3' which are another RGB color value of another pixel different from the pixel corresponding to the first input data sample DSa. The two pixels, respectively represented as the first and the second input data samples DSa and DSb, may be in the same image, or be in the same position of frame but from two different frames of a video. In other words, a correlation may exist between said two pixels which respectively correspond to the first and the second input data samples DSa and DSb.

The information package HCc comprises six slots (with the number "m" of slots being equal to 6). The coefficient H1, corresponding to the vector r1 of the vector basis, is a position H1 of a first slot of the information package HCc. More precisely, the information contained in the channel DS1 of the first input data sample DSa is allocated to the first slot in the information package HCc, which allows the position H1 of said first slot to be used as the coefficient H1 of the first slot. During the following information allocation step 220, the channel DS1 will be entirely allocated into the first slot of the information package HCc. Similarly, the coefficients H2 and H3, respectively corresponding to the vectors r2 and r3 of the vector basis, are respectively the position H2 of a second slot and the position H3 of a third slot in the information package HCc. The second and the third slots respectively correspond to the channels DS2 and DS3 of the first input data sample DSa.

In addition, the coefficient H12, corresponding to the unit bivector r12, is the position H12 of a fourth slot of the information package HCc. More precisely, information contained in the channel DS1' of the second input data sample DSb is allocated to the fourth slot in the information package HCc, which allows the position H12 of said fourth slot to be used as the coefficient H12 of the fourth slot. During the following information allocation step 220, the channel DS1' will be entirely allocated into the fourth slot of the information package HCc. Similarly, the coefficients H23 and H31, respectively corresponding to the unit bivectors r23 and r31, are respectively the position H23 of the fifth slot and the position H31 of the sixth slot of the information package HCc. The fifth and the sixth slots respectively correspond to the channels DS2' and DS3' of the second input data sample DSb. Furthermore, according to a preferable but not limiting embodiment, the coefficient H0 can be, as described previously, equal to 1. The coefficient H123 can be advantageously equal to 0 as in the present embodiment, no data comprised in the first and the second input data samples DSa and DSb needs to be allocated by using the coefficient H123. In other embodiments, the coefficients H0 and H123 can be respectively equal to a value different from 0 or 1.

The information allocation step 220 is then configured to allocate the channels of the at least one input data sample (DS) to the m slots of the information package generated in the information package generation step 210. Each of the channels of the at least one input data sample is allocated, according to the position of one of the m slots which corresponds to said channel, to said slot in the generated information package. As described above, the positions of the m slots of the generated information package are obtained and are represented as the coefficients of the Geometric Algebra multivector utilized to generate the information package.

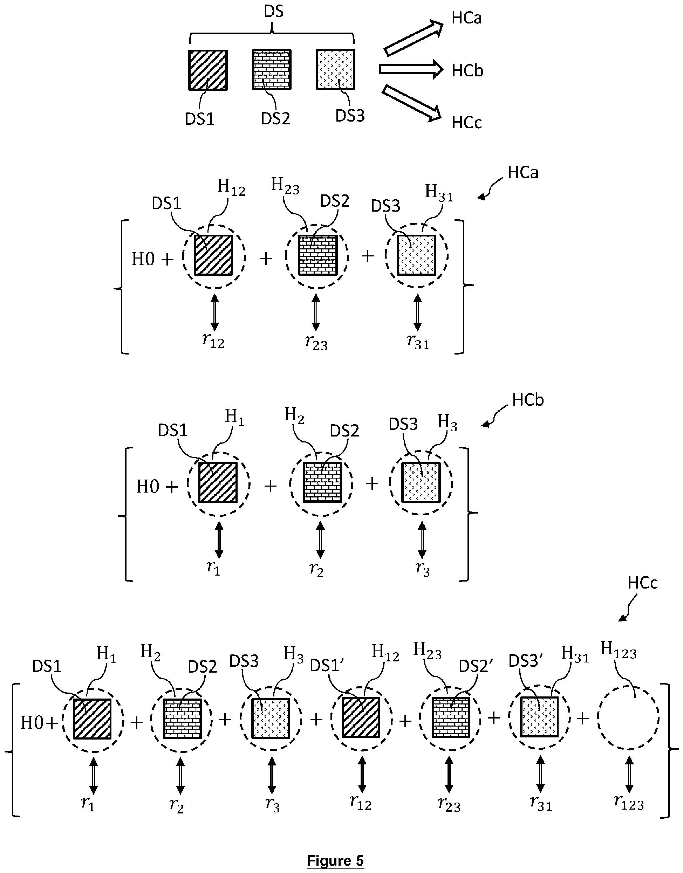

The above-mentioned information package HCa, as illustrated in Figure 4, is taken as an example. The information package HCa comprises the first, the second and the third slots respectively corresponding to the coefficients H12, H23 and H31. The channel DS1 of the input data sample DS is allocated to the first slot according to the coefficient H12 which corresponds to the unit bivector r12 and is utilized as the position H12 of said first slot in the information package HCa. Similarly, the channels DS2 and DS3 of the input data sample DS are respectively allocated to the second and the third slots, respectively according to the coefficient H23 corresponding to said second slot and according to the coefficient H31 corresponding to said third slot. The information package HCa with the input data sample DS which has been allocated to the slots, is illustrated in Figure 5 and is represented as a following equation (7): $HCa = H0 + DS1 \cdot r_{12} + DS2 \cdot r_{23} + DS3 \cdot r_{31}$, where $r_{12}^2 = r_{23}^2 = r_{31}^2 = -1$ and the coefficient H0 is preferably equal to 1. Figure 5 illustrates three possible information packages HCa, HCb, and HCc respectively with at least one three-channel input data sample which has been allocated, according to an embodiment of the invention.

Similarly, in another embodiment where the above-mentioned information package HCb is generated in the information package generation step 210, the information package HCb with the input data sample DS comprising the channels DS1 to DS3 having been allocated to the three slots of the information package HCb, is represented as a following equation (8): $HCb = H0 + DS1 \cdot r_1 + DS2 \cdot r_2 + DS3 \cdot r_3$, where $r_1^2 = r_2^2 = r_3^2 = 1$ and the coefficient H0 is preferably equal to 1. The information package HCb, as illustrated in Figure 5, comprises the first, the second and the third slots respectively corresponding to the coefficients H1, H2 and H3.

In a different embodiment where the above-mentioned information package HCc is generated in the information package generation step 210, the information package HCc with the first and the second input data samples DSa and DSb respectively comprising the channels DS1 to DS3 and DS1' to DS3' having been allocated to the six slots of the information package HCc, is represented as a following equation (9): $HCc = H0 + DS1 \cdot r_1 + DS2 \cdot r_2 + DS3 \cdot r_3 + DS1' \cdot r_{12} + DS2' \cdot r_{23} + DS3' \cdot r_{31} + H_{123} \cdot r_{123}$, where, as mentioned above, $r_1^2 = r_2^2 = r_3^2 = 1$, $r_{12}^2 = r_{23}^2 = r_{31}^2 = -1$, $r_{123}^2 = -1$, the coefficient H0 being preferably equal to 1, and the coefficient H123 being preferably equal to 0 or 1.

The information package with the at least one input data sample having been allocated to the slots of said information package, formed at the end of the information allocation step 220, allows to contain information about correlations between any two of the channels of the at least one input data sample. For instance, a correlation exists between the channels DS1 and DS3 of the same input data sample. In another example, a correlation exists between the channel DS1 of the first input data sample DSa and the channel DS1' of the second input data sample DSb. The correlations contained in the information package will contribute to the training of the neural network utilizing the desired computation graph 10H, which will result in reducing the number of the input data samples required for training of the neural network and/or reducing the number of computing iterations performed for the training (i.e. the training step 250).

The information package HCa, HCb or HCc, which is loaded with the channels of the input data samples fed into the input computational graph 10 and is generated in the information package step 220, comprises values being represented in a desired data format to be fed as values of the transformed input variables Xh, Yh, Zh into the desired computational graph 10H.

The weight package generation step 230 is configured to generate a weight package, as a function of the at least one weight set which comprises "q" weights W1, W2... Wq, where the number "q" is an integer utilized to represent an original number of weights of the at least one weight set. Preferably, the generated weight package and the information package generated in the step 220 comprise the same number "m" of slots.

As mentioned previously, the datatype (data format) of the weights W1, W2... Wq of the weight set can be, alternatively, one of the aforementioned conventional datatypes compatible with the linear algebra-based operations. Initial values of the weights W1, W2... Wq are preferably assigned by the user.

Preferably, the weight package generation step 230 comprises a weight package allocation step 231 configured to generate the weight package by allocating said q weights W1, W2... Wq of the at least one weight set to a duplication of the information package which is generated in the information package generation step 210. More precisely, the information package generated in the information package generation step 210 can be considered as a data container without having been loaded yet with all of the channels DS1, DS2... DSn of the at least one input data sample DS. Said information package generated in the step 210 is duplicated. The duplicated information package is then loaded with the q weights W1, W2... Wq so as to form the weight package.

The weights W1, W2... Wq of the at least one weight set are, preferably, allocated into said duplicated information package. Each of the weights (e.g. W1) of the weight set is allocated, to one of the m slots in the duplicated information package. As described above, the positions of the m slots of the duplicated information package are obtained and are represented as the coefficients of the Geometric Algebra multivector utilized as the duplicated information package.

Taking the embodiment shown in Figure 2 as an example, the three input variables X, Y and Z of the input computational graph 10 correspond respectively to a weight W1, W2 or W3 of at least one weight set.

In an embodiment where a duplicated information package (HCWa) is generated by duplicating the above-mentioned information package HCa. Said duplicated information package HCWa comprises the first, the second and the third slots respectively corresponding to the coefficients H12, H23 and H31. The weight W1 is allocated to the first slot according to the coefficient H12 which corresponds to the unit bivector r12 and is utilized as the position H12 of said first slot in the duplicated information package HCWa. The coefficient H12 is the position of the first slot of the information package HCa corresponds to said input data sample.

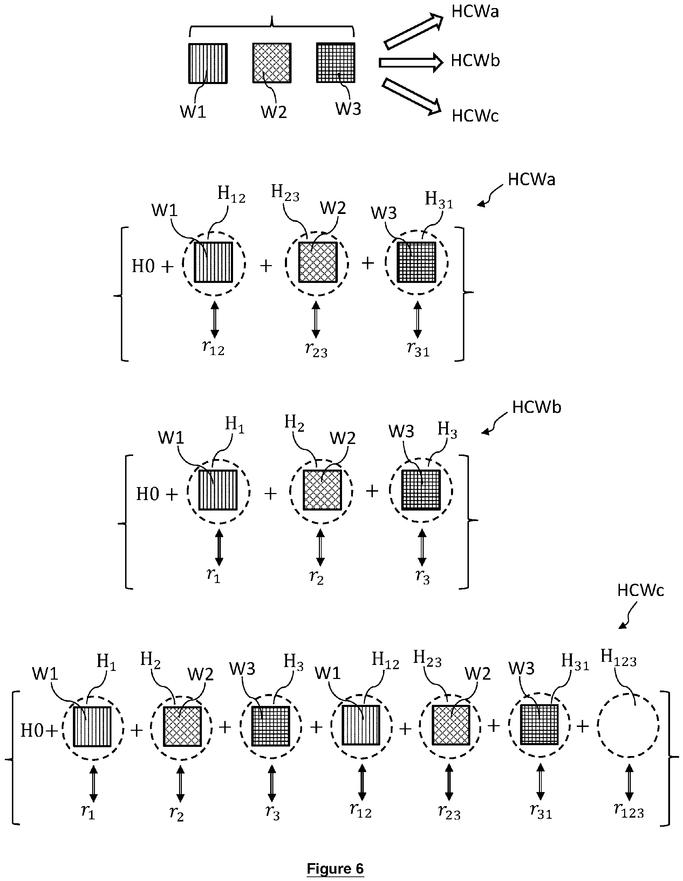

Similarly, the weights W2 and W3 are respectively allocated to the second and the third slots, respectively according to the coefficient H23 corresponding to said second slot and according to the coefficient H31 corresponding to said third slot. The duplicated information package HCWa loaded with the weights W1, W2, W3 of the weight set forms thus a weight package HCWa, which, as illustrated in Figure 6, is represented as a following equation (10): *HCWa*

$= H0 + W1 \cdot r_{12} + W2 \cdot r_{23} + W3 \cdot r_{31}$, where $r_{12}^2 = r_{23}^2 = r_{31}^2 = -1$ and the coefficient H0 is preferably equal to 1. Figure 6 illustrates three possible weight packages HCWa, HCWb, HCWc according to an embodiment of the invention.

Similarly, in another embodiment, a weight package (HCWb) is generated by using a duplicated information package HCWb formed by duplicating the above-mentioned information package HCb. The three slots of the duplicated information package HCWb respectively corresponds to the coefficients H1, H2 and H3. The weights W1, W2, W3 are respectively allocated to one of the three slots of the duplicated information package HCWb. Therefore, the weight package HCWb generated in the current step 230, as illustrated in Figure 6, is represented as a following equation (11): $HCWb = H0 + W1 \cdot r_1 + W2 \cdot r_2 + W3 \cdot r_3$, where $r_1^2 = r_2^2 = r_3^2 = 1$ and the coefficient H0 is preferably equal to 1.

In a different embodiment, a weight package (HCWc) is generated by using a duplicated information package HCWc formed by duplicating the above-mentioned information package HCc comprising six slots. According to an embodiment, the weight set comprises the weights W1, W2, W3 with values being determined by the user or, alternatively, being previously obtained in the last iteration of the training. Each of the weights W1, W2, W3 is allocated to two of the six slots of the duplicated information package HCWc. The weight package HCWc generated in the current step 230, as illustrated in Figure 6, is represented as a following equation (12): $HCWc = H0 + W1 \cdot r_1 + W2 \cdot r_2 + W3 \cdot r_3 + W1 \cdot r_{12} + W2 \cdot r_{23} + W3 \cdot r_{31} + H_{123} \cdot r_{123}$.

Alternatively, the at least one weight set according to which the weight package HCWc is generated, comprises plural weight sets comprising weights being determined by the user or, alternatively, the values previously obtained in the last iteration of the training. In the present embodiment, the at least one weight set comprises a first weight set comprising the weights W1, W2, W3, and the second weight set comprising weights W1', W2', W3'. Each of the weights (e.g. W2') is allocated to one of the six slots of the duplicated information package HCWc. The weight package HCWc generated in the current step 230 is represented as a following equation (13): $HCWc = H0 + W1 \cdot r_1 + W2 \cdot r_2 + W3 \cdot r_3 + W1' \cdot r_{12} + W2' \cdot r_{23} + W3' \cdot r_{31} + H_{123} \cdot r_{123}$.

In both of the above-mentioned two equations (12) and (13), $r_1^2 = r_2^2 = r_3^2 = 1$, $r_{12}^2 = r_{23}^2 = r_{31}^2 = -1$, $r_{123}^2 = -1$, the coefficient H0 being preferably equal to 1, and the coefficient H123 being preferably equal to 0 or 1.

The generated weight package (e.g. HCWa, HCWb, HCWc) will be trained in the training step 250. In addition, it is noted that additions and multiplications utilized in the above-mentioned equations (1) to (13) are geometric algebra-based additions and multiplications, not linear algebra-based ones.

The operation redefinition step 240 is configured to replace the operations of the input computational graph (e.g. input computational graph 10) with corresponding geometric algebra-based operations. Therefore, the desired computational graph (e.g. desired computational graph 10H) comprises said geometric algebra-based operations which are compatible with the information package (e.g. HCa, HCb or HCc) obtained at the information allocation step 220.

As mentioned above, the operations of the input computational graph comprise at least one of linear algebra-based additions, subtractions, multiplications and/or divisions. The current operation redefinition step 240 comprises at least one of following steps is performed:

- the linear algebra-based addition is replaced by a geometric algebra-based addition;
- the linear algebra-based subtraction is replaced by a geometric algebra-based subtraction;
- the linear algebra-based multiplication is replaced by a geometric algebra-based multiplication;
- the linear algebra-based division is replaced by a geometric algebra-based division.

The input computational graph 10 comprising the two linear algebra-based operations OP1 and OP2 which are respectively an addition and a multiplication is taken as an example. During the operation redefinition step 240, the operation OP1 is replaced by a corresponding geometric algebra-based addition OPH2, and the operation OP2 is replaced by a corresponding geometric algebra-based multiplication OPH2. The desired computational graph 10H comprises thus the two geometric algebra-based operations OPH1 and OPH2 which are compatible with the generated information package(s) and weight package(s).

The operation redefinition step 240 is performed before the first execution of the desired computational graph. In other words, the operation redefinition step 240 is performed before the first time of executing the training step 250 (i.e. the first iteration of the training of the neural network utilizing the desired computation graph), and does not require to be re-performed for the rest of the iterations of the training of the neural network utilizing the same desired computation graph. According to an embodiment, the operation redefinition step 240 may be performed before, at the same time or after the above-mentioned steps 210, 220, 230 of the graph processing method 200.

After the execution of the above-mentioned steps 210 to 240, wherein the desired computational graph (e.g. desired computational graph 10H) comprises the corresponding geometric algebra-based operations (e.g. OPH1, OPH2) and said generated information package (e.g. HCa) loaded with the input data samples of the at least one input data sample.

The training step 250 is then performed so as to train the desired computational graph (e.g. desired computational graph 10H) comprising the geometric algebra-based operations and the generated weight package (e.g. HCWa, HCWb, or HCWc), by using the information package (e.g. HCa, HCb or HCc) generated as a function of the channels (e.g. DS1, DS2... DSn) of the at least one input data sample DS fed into the input computational graph (e.g. input computational graph 10). In other words, in order to train the input computational graph more efficiently and effectively, the input computational graph, the channels of the at least one input data sample DS and the weights (e.g. W1, W2... Wq) of the variables are respectively transformed into the desired computational graph, the above-mentioned information package and the weight package, and the training step 250 is performed on the desired computational graph. The input computational graph is no longer to be directly trained.

One execution of the training step 250 can be considered as one of iterations of the training of the desired computation graph. For the first iteration, the initial values of the weights W1, W2... Wq contained in (or in other words, utilized to generate) said weight package, are preferably determined by the user and then adjusted in the training step 250.

At the beginning of the second iteration, the values of the weights W1, W2... Wq are those obtained in the previous iteration and contained in the weight package, and are then adjusted by using a new information package generated as a function of different input data samples newly fed into the input computational graph (e.g. input computational graph 10).

The weight package is considered to comprise appropriate and satisfying values of the weights W1, W2... Wq (of the at least one weight set) while at least one of following conditions is satisfied:

- after a predefined number of the iterations performed for the training,
- a threshold value, such as one represented by a standard training technique called "early stopping", is met.

The invention can be applied to various fields, and it regards various applications, such as a graph modifying tool/library, a graph compiler and a microcode. The graph modifying tool/library, regarding the implementation of the above-mentioned steps 210 to 250 of the graph processing method 200, is capable of performing real-time modification.

The graph compiler is configured to compile the input computational graph into the desired computational graph by performing the above-mentioned weight package generation step 230, the operation redefinition step 240 and the training step 250. The information package generation step 210 and the information allocation step 220, both regarding the generation of the information package as a function of the input data samples, are optional and not necessary. In an optional embodiment, before using the compiler, said steps 210 and 220 can be performed only one time so as to generate information packages, each of which corresponding to one of a plurality of input data samples.

As for the microcode, the information package and the geometric algebra-based operations are implemented as transcendental functions in the microcode that will be loaded inside a computing processor, such as a standard processor (e.g. x86) or a coprocessor (e.g. GPU, TPU, NPU, FPGA, respectively the abbreviation of "Graphics Processing Unit", "Tensor Processing Unit", "Neural Processing Unit", "Field-Programmable Gate Array").

In order to implement the microcode, two preliminary steps 2010 and 2020, as listed below, are preferably performed before the above-mentioned steps 210 to 250 of the graph processing method 200:

- Microcode generation step 2010: a source code configured to implement the above-mentioned steps 210 to 250 of the graph processing method 200 is converted into a microcode. Such microcode is hardware-specific, and thus said conversion must follow the computing-processor manufacturer guidelines.
- Microcode-loading step 2020: The resulting microcode obtained in the step 2010 is loaded into a target computing processor configured to execute said microcode. This is achieved by using tools made available by computing-processor manufacturers, e.g., Intel® Firmware Support Package (Intel® FSP).

From there on, the input computational graph can thus be implemented and calculated by the target computing processor where the microcode is loaded during the step microcode-loading step 2020, and the above-mentioned steps 210 to 250 of the graph processing method 200 are then executed.

According to an embodiment, the graph processing system 1 comprises following modules: a calculation module 10, a data storage module 7, and/or a transmission module 8, as illustrated in Figure 3.

The calculation module 10 is configured, in cooperation with other modules of the graph processing system 1, to perform the steps of the graph processing method 200. In a preferred embodiment, the calculation module 10 is implemented by a computing processor of a computing device, such as a standard processor (e.g. x86, ARM) or a coprocessor (e.g. GPU, TPU, NPU, FPGA) of a computer or of a computing server. Alternatively, the calculation module 10 can be a cloud computing server. More advantageously, the cloud computing server has the ability to perform big data computation. In another embodiment, the calculation module 10 comprises a computing processor of a mobile computing device and the cloud computing server respectively utilized to execute a part of the steps of the graph processing method 200.

The data storage module 7 is configured to store at least a portion of data generated and/or received during one of the steps of the graph processing method 200, by the calculation module 10. As mentioned above, the data storage module 7 is built in the computing device. In an alternative embodiment, the data storage module 7 may a remote data storage means accessible by the calculation module 10 and if needed, by the above-mentioned mobile computing device as well.

The transmission module 8 is configured to perform data transmission between at least two of the following modules: the calculation module 10, the movement tracking module 3, an external module which is outside the graph processing system 1 and is allowed to obtain data generated during the execution of the graph processing method 200. For example, in an embodiment where the data storage module 7 is not electrically coupled to the calculation module 10, data transmission between the calculation module 10 and the data storage module 7 can be performed by the transmission module 8.

In a preferable embodiment, the transmission module 8 is configured to execute real-time data transmission performed in a pre-selected wireless communication mode, for example data transmission according to the Wi-Fi standard of the IEEE 802.11 group (ISO / IEC 8802-11), or a data transmission via a cellular network according to 2G, 3G, 4G or 5G telecommunications standards. In other words, the transmission module 8 comprises at least one WiFi connection means or at least one 2G / 3G / 4G / 5G telecommunication means. It is noted that other wireless connection means performing data transmission according to another communication protocol different from the above-mentioned ones can be utilized as the transmission module 8 without departing from the scope of the present invention.

The invention is nevertheless not limited to the means utilized as the calculation module 10, the data storage module 7, and the transmission module 8.

The present invention provides a robust solution which comprises transforming a computational graph (e.g. the above-mentioned input computational graph 10) which comprises the channels of the at least one input data sample and the weights of the variables of said computational graph, into a corresponding desired computational graph (e.g. the above-mentioned desired computational graph 10H). The training of the computational graph is thus performed on the corresponding desired computational graph, no longer directly on the computational graph which is not processed by the graph processing method. The solution proposed by the present invention allows to preserve the information contained in the channels fed into the computational graph to be trained, and therefore to improve the training of neural networks with a better data efficiency and a higher prediction accuracy while preserving the essence of the neural-network architecture. Consequently, training a neural network requires fewer input data samples, a smaller number of computing iterations, and lower energy consumption. The size of the neural network model can also be reduced.

In addition, compared to the conventional datatypes such as "bfloat16" which could reduce the amount of computation in the inference phase, the present invention provides an efficient computational implementation of algebraic techniques that allow to extract more information when multiplying two vectors. As a linear algebra-based inner product is substituted by a more comprehensive product (i.e. a geometric algebra-based product), which maps two vectors onto a manifold where differential geometry can be performed, the present invention allows to extract more information from the at least one input data sample for the execution of the desired computational graph, which improves the data efficiency of the training of a neural network by executing the desired computational graph. Because of the better learning capabilities provided by the present invention, a lower number of free parameters (i.e. any kind of datatype such as integer, float, bfloat16 etc.) is used to construct a neural-network model, which results in less computation than the linear-algebra counterpart for the same level of quantization. The amount of data needed to train the neural-network computational graph is thus considerably reduced, which improves the performance of deep-learning algorithms.

The invention is not limited to the previously described embodiments but extends to any embodiment within its spirit.

## Claims

1. A graph processing method (200) configured to transform an input computational graph (10) into a desired computational graph (10H), the input computational graph (10) comprising a plurality of input variables (X, Y, Z) and at least one operation (OP1, OP2) of a mathematical expression, wherein at least one input data sample (DS) comprising a plurality of channels (DS1, DS2, DS3... DSn) is fed as values of said input variables into the input computational graph (10); the graph processing method (200) being **characterized in** comprising:

   - an information package generation step (210) configured to generate, as a function of the at least one input data sample (DS), an information package (HCa) formed by utilizing entirely or partially a structure of a multivector (MV), wherein the multivector (MV) is a geometric algebra multivector (MV);
   - an information allocation step (220) configured to allocate the channels (DS1, DS2, DS3... DSn) of the at least one input data sample (DS) to said generated information package (HCa); and
   - an operation redefinition step (240) configured to replace the at least one operation of the input computational graph (10) with at least one corresponding geometric algebra-based operation (OPH1, OPH2);

wherein the desired computational graph (10H) comprises the at least one corresponding geometric algebra-based operation (OPH1, OPH2) and said generated information package (HCa) loaded with the channels (DS1, DS2, DS3... DSn) of the at least one input data sample (DS).

2. The graph processing method (200) according to claim 1, wherein:

- the channels (DS1, DS2... DSn) of the at least one input data sample (DS) are allocated to "m" slots of said generated information package (HCa), "m" being the number of slots which is an integer determined as a function of the size of the at least one input data sample (DS);
- said multivector (MV) is a D-dimensional multivector built based on a vector space formed according to a t-dimensional vector basis $\{r_1, r_2,... r_t\}$ formed by the vectors $r_1, r_2... r_t$, "t" being an integer utilized to represent the dimension of the vector basis, the number "D" being the dimension of the multivector (MV) determined as a function of said number "t".

3. The graph processing method (200) according to claim 2, wherein said multivector (MV) comprises coefficients which respectively correspond to one of blades of the multivector (MV), the number of the coefficients being equal to the number "D" which is equal to $2^t$; among the coefficients of the generated multivector (MV), m coefficients being respectively utilized as a position of one of the m slots of the generated information package (HCa).

4. The graph processing method (200) according to claim 3, wherein:

- the information allocation step (220) is configured to allocate the channels (DS1, DS2, DS3... DSn) of the at least one input data sample (DS) to said generated information package (HCa), according to the position ($H_{12}$, $H_{23}$, $H_{31}$ or $H_1$, $H_2$, $H_3$) of said slot which corresponds to said channel;
- the information package (HCa, HCb or HCc) loaded with the channels (DS1, DS2, DS3) of the at least one input data sample (DS) contains information about correlations between any two of the channels (DS1, DS2, DS3) of the at least one input data sample (DS).

5. The graph processing method (200) according to claim 3 or claim 4, wherein the m coefficients have an algebraic relationship governed by Geometric Algebra; each of the m coefficients is generated as a function of the respective channels (DS1, DS2, DS3... DSn) of the at least one input data sample (DS).

6. The graph processing method (200) according to any one of claims 3 to 5, wherein in the information package generation step (210), the information contained in one of said channels (DS1) is allocated to one of the m slots of the generated information package (HCa), which allows a position ($H_{12}$) of said slot to be used as the coefficient ($H_{12}$) of said slot where the information of said channel (DS1) is allocated.

7. The graph processing method (200) according to any one of claims 1 to 6, wherein said multivector (MV) is represented as $MV = H0 + H_1 \cdot r_1 + H_2 \cdot r_2 + H_3 \cdot r_3 + H_{12} \cdot r_{12} + H_{23} \cdot r_{23} + H_{31} \cdot r_{31} + H_{123} \cdot r_{123}$, wherein:

- the additions and multiplications are geometric algebra-based additions and multiplications;
- MV is the multivector;
- $\{r1, r_2, r_3\}$ is a vector basis based on which the multivector MV is built;
- $r_{12}, r_{23}, r_{31}$ are respectively a unit bivector;
- $r_{123}$ is a trivector;
- $\{1, r_1, r_2, r_3, r_{12}, r_{23}, r_{31}, r_{123}\}$ are respectively blades of the multivector MV; and
- H0, $H_1$, $H_2$, $H_3$, $H_{12}$, $H_{23}$ and $H_{31}$ and $H_{123}$ being coefficients of the blades 1, $r_1$, $r_2$, $r_3$, $r_{12}$, $r_{23}$, $r_{31}$, and $r_{123}$ of the multivector MV.

8. The graph processing method (200) according to claim 7, wherein by utilizing at least partially the structure of the multivector (MV), one of following three information packages (HCa, HCb, HCc) respectively comprising a plurality of slots is generated in the information package generation step (210):

- the information package (HCa) represented as $HCa = H0 + H_{12} \cdot r_{12} + H_{23} \cdot r_{23} + H_{31} \cdot r_{31}$, wherein HCa is said information package formed by using the unit bivectors $r_{12}, r_{23}, r_{31}$ and the respective coefficients $H_{12}$, $H_{23}$ and $H_{31}$ of said multivector MV; $H_{12}$, $H_{23}$ and $H_{31}$ being the coefficients utilized as positions of three slots in the information package HCa;
- the information package (HCb), represented as: $HCb = H0 + H_1 \cdot r_1 + H_2 \cdot r_2 + H_3 \cdot r_3$, wherein HCb is said information package formed by using the vectors $r_1$, $r_2$, $r_3$ of the vector basis and the respective coefficients $H_1$, $H_2$ and $H_3$ of said multivector MV; $H_1$, $H_2$ and $H_3$ being the coefficients utilized as positions of three slots in the information package HCb;

- the information package (HCc) represented as $HCc = H0 + H_1 \cdot r_1 + H_2 \cdot r_2 + H_3 \cdot r_3 + H_{12} \cdot r_{12} + H_{23} \cdot r_{23} + H_{31} \cdot r_{31} + H_{123} \cdot r_{123}$, wherein HCc is said information package formed by using the vectors $r_1$, $r_2$, $r_3$ of said vector basis, the unit bivectors $r_{12}$, $r_{23}$, $r_{31}$, and the respective coefficients $H_1$, $H_2$, $H_3$ $H_{12}$, $H_{23}$, $H_{31}$ of said multivector MV; $H_1$, $H_2$, $H_3$, $H_{12}$, $H_{23}$ and $H_{31}$ being the coefficients utilized as positions of six slots in the information package HCc.

9. The graph processing method (200) according to claim 8, wherein the information allocation step (220) is configured to allocate respectively the channels (DS1, DS2, DS3, DS1', DS2', DS3') of the at least one input data sample (DS), into a corresponding slot of the slots of the information package (HCa, HCb, HCc) generated in the information package generation (210), according to the position ($H_{12}$, $H_{23}$, $H_{31}$, $H_1$, $H_2$, $H_3$) of said slot which corresponds to said channel, so as to obtain the information package (HCa, HCb, HCc) which is loaded with the channels (DS1, DS2, DS3, DS1', DS2', DS3') and is represented as:

- $HCa = H0 + DS1 \cdot r_{12} + DS2 \cdot r_{23} + DS3 \cdot r_{31}$, wherein DS1, DS2, DS3 are the channels of the at least one data sample DS; or
- $HCb = H0 + DS1 \cdot r_1 + DS2 \cdot r_2 + DS3 \cdot r_3$, wherein DS1, DS2, DS3 are the channels of the at least one data sample DS; or
- $HCc = H0 + DS1 \cdot r_1 + DS2 \cdot r_2 + DS3 \cdot r_3 + DS1' \cdot r_{12} + DS2' \cdot r_{23} + DS3' \cdot r_{31} + H_{123} \cdot r_{123}$; wherein the at least one input data sample (DS) comprises a first input data sample (DSa) and a second input data sample (DSb), DS1, DS2, DS3 being the channels of the first input data sample (DSa), DS1', DS2', DS3' being the channels of the second input data sample (DSb).

10. The graph processing method (200) according to any one of claims 1 to 9, comprising further a weight package generation step (230) configured to generate a weight package (HCWa, HCWb or HCWc), as a function of at least one weight set comprising "q" weights (W1, W2... Wq), where "q" is the number of weights; wherein the weight package generation step (230) comprises a weight package allocation step (231) configured to generate the weight package (HCWa, HCWb or HCWc) by allocating the q weights (W1, W2... Wq) to a duplication (HCWa, HCWb or HCWc) of the information package which is generated in the information package generation step (210).

11. The graph processing method (200) according to any one of claims 10, wherein in the weight package generation step (231), one of said q weights of the at least one weight set is allocated to one of slots of the duplicated information package (HCWa, HCWb or HCWc).

12. The graph processing method (200) according to claim 10 or claim 11 combined with claim 9, wherein the weight package generation step (230) is configured to generate the weight package (HCWa, HCWb or HCWc) which is loaded with the weights (W1, W2, W3) of the at least one weight set and is represented as:

$$HCWa = H0 + W1 \cdot r_{12} + W2 \cdot r_{23} + W3 \cdot r_{31};$$

or

$$HCWb = H0 + W1 \cdot r_1 + W2 \cdot r_2 + W3 \cdot r_3;$$

or

$$HCWc = H0 + W1 \cdot r_1 + W2 \cdot r_2 + W3 \cdot r_3 + W1 \cdot r_{12} + W2 \cdot r_{23} + W3 \cdot r_{31} + H_{123} \cdot r_{123}.$$

13. The graph processing method (200) according to any one of claims 7 to 12, wherein in at least one of said multivector (MV), said generated information package (HCa, HCb or HCc), and said weight package (HCWa, HCWb or HCWc), at least one of following conditions is met:

- H0 is equal to 1,

- $H_{123}$ is equal to 0 or 1,
- said vector basis is an orthonormal vector basis,
- $r_1{}^2 = r_2{}^2 = r_3{}^2 = 1$,
- $r_{12}{}^2 = r_{23}{}^2 = r_{31}{}^2 = -1$,
- $r_{123}{}^2 = -1$,
- the vector space is a Euclidean space $R^3$.

14. The graph processing method (200) according to any one of claims 1 to 13, wherein:

   - the at least one operation of the input computational graph (10) comprising at least one of linear algebra-based additions, subtractions, multiplications and/or divisions; and
   - the operation redefinition step (240) comprises at least one of following steps:

      • the linear algebra-based addition is replaced by a geometric algebra-based addition;
      • the linear algebra-based subtraction is replaced by a geometric algebra-based subtraction;
      • the linear algebra-based multiplication is replaced by a geometric algebra-based multiplication;
      • the linear algebra-based division is replaced by a geometric algebra-based division.

15. The graph processing method (200) according to any one of claims 10 to 14, comprising further a training step (250) configured so as to train the desired computational graph (10H) comprising the at least one geometric algebra-based operation and the generated weight package (HCWa, HCWb, HCWc), by using the generated information package (HCa, HCb or HCc) loaded with the channels (DS1, DS2, DS3... DSn) fed into the input computational graph (10).

16. The graph processing method (200) according to claim 15, wherein during the training step (250), the weights (W1, W2... Wq) contained in said weight package are adjusted by using a new information package generated as a function of different input data samples newly fed into the input computational graph (10).

17. The graph processing system (1) comprising a calculation module (10) utilized to perform at least one of steps (210 to 250) of the graph processing method (200) according to any one of claims 1 to 16, wherein the calculation module (10) is one of following standard processors or coprocessors: a standard processor x86, a standard processor ARM, a graphics processing unit (GPU), a tensor processing unit (TPU), a neural processing unit (NPU), a field-programmable gate array (FPGA).

10

X

OP1    P

Y

OP2 → Q

Z

A

B

**Figure 1**

200

210

220         240

231

230

250

**Figure 2**

10

X → OP1 →P→ OP2 → Q

Y →

Z →

⇓

10

7      8

1

⇓

10H

Xh → OPH1 →Ph→ OPH2 → Qh

Yh →

Zh →

**Figure 3**

**Figure 4**

**Figure 5**

Figure 6

Europäisches
Patentamt

European
Patent Office

Office européen
des brevets

## EUROPEAN SEARCH REPORT

Application Number

EP 20 30 5726

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/129327 A1 (GOOGLE LLC [US]) 12 July 2018 (2018-07-12) * abstract * * paragraph [0003] - paragraph [0040] * * figures 1,2 * ----- | 1-17 | INV. G06N3/063 G06N3/08 G06N3/10 |

| | TECHNICAL FIELDS SEARCHED (IPC) |
|---|---|
| | G06N |

The present search report has been drawn up for all claims

| Place of search | Date of completion of the search | Examiner |
|---|---|---|
| The Hague | 15 December 2020 | Appeltant, Lennert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 30 5726

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2020

| Patent document cited in search report | Publication date | Patent family member(s) | Publication date |
|---|---|---|---|
| WO 2018129327 A1 | 12-07-2018 | CN 108345937 A | 31-07-2018 |
| | | DE 102018100239 A1 | 12-07-2018 |
| | | GB 2560410 A | 12-09-2018 |
| | | HK 1259126 A1 | 22-11-2019 |
| | | SG 10201800155P A | 30-08-2018 |
| | | US 9798527 B1 | 24-10-2017 |
| | | WO 2018129327 A1 | 12-07-2018 |

EPO FORM P0459

For more details about this annex : see Official Journal of the European Patent Office, No. 12/82